(19) Europäisches Patentamt
European Patent Office
Office européen des brevets

(11) EP 2 466 283 A1

# (12) DEMANDE DE BREVET EUROPEEN

(43) Date de publication:
**20.06.2012 Bulletin 2012/25**

(21) Numéro de dépôt: **11306528.8**

(22) Date de dépôt: **22.11.2011**

(51) Int Cl.:
*G01J 5/08* (2006.01) *G01J 5/20* (2006.01)
*G02B 5/18* (2006.01) *G01J 5/02* (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **17.12.2010 FR 1060713**

(71) Demandeur: **Commissariat à l'Énergie Atomique et aux Énergies Alternatives**
**75015 Paris (FR)**

(72) Inventeurs:
- **Dumont, Geoffroy**
**75011 Paris (FR)**
- **Arnaud, Agnès**
**38420 Saint Jean Le Vieux (FR)**
- **Boutami, Salim**
**38100 Grenoble (FR)**
- **Imperinetti, Pierre**
**38180 Seyssins (FR)**
- **Mary, Alexandre**
**86100 Chatelleraut (FR)**
- **Pocas, Stéphane**
**38000 Grenoble (FR)**
- **Rabaud, Wilfried**
**38430 Moirans (FR)**

(74) Mandataire: **Vuillermoz, Bruno et al**
**Cabinet Laurent & Charras**
**"Le Contemporain"**
**50, Chemin de la Bruyère**
**69574 Dardilly Cédex (FR)**

## (54) Détecteur infrarouge à base de micro-planches bolométriques suspendues

(57) Ce détecteur bolométrique matriciel pour la détection d'un rayonnement électromagnétique dans une gamme prédéterminée de longueurs d'onde infrarouges ou térahertz, comprend :

- un substrat (16); et
- une matrice de micro-planches bolométriques pour la détection dudit rayonnement, suspendues au dessus du substrat à l'aide de bras de soutien.

Il comporte une membrane métallique (22) disposée au dessus et autour de chaque micro-planche, et dans laquelle sont formées des ouvertures (26); lesdites ouvertures (26) de la membrane métallique (22) étant placées périodiquement dans celle-ci le long d'au moins un axe prédéterminé selon une période inférieure ou égale à $\frac{\lambda}{n}$, où λ est une longueur d'onde de la gamme de longueurs d'onde à détecter et *n* est l'indice de réfraction moyen du milieu séparant la micro-planche de la membrane métallique (22).

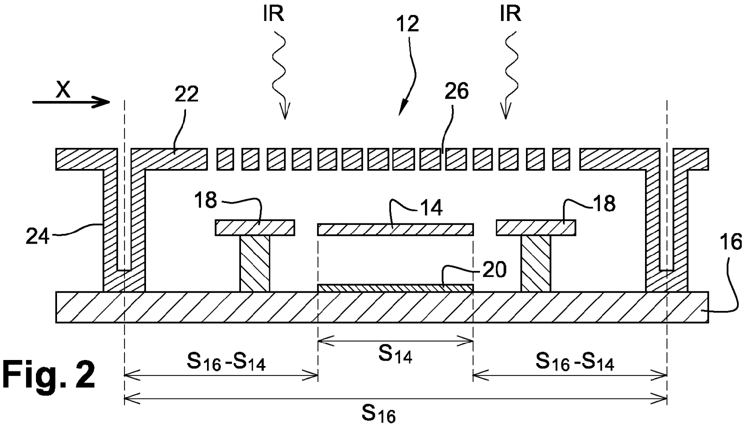


Fig. 2

EP 2 466 283 A1

## Description

### DOMAINE DE L'INVENTION

L'invention a trait au domaine de la détection bolométrique infrarouge ou térahertz, et plus particulièrement au domaine de la détection bolométrique à l'aide d'une matrice de micro-planches suspendues au dessus d'un substrat.

### ETAT DE LA TECHNIQUE

Comme il est communément admis, la détection infrarouge, c'est-à-dire dans une gamme de longueurs d'onde comprises entre 0,75 μm et 1.000 μm, est un domaine technologique soumis à des problématiques particulières. En effet, tout objet émet dans le spectre infrarouge dès lors que sa température est supérieure à 0°K. Ainsi, lorsqu'un détecteur infrarouge est non refroidi, les organes entourant les éléments sensibles (substrats, connectiques, boitiers, optiques, etc...) émettent un rayonnement infrarouge significatif venant s'ajouter au rayonnement issu de la scène que l'on cherche à détecter. Cette composante non utile peut être très importante et parfois constituer plus de 99% du signal total produit par les éléments de détection à une température de 300°K. Cette composante non utile est communément désignée sous l'expression de « bruit thermique » ou de « mode commun ».

Par conséquent, et contrairement à d'autres types de détection, et notamment la détection visible, il est nécessaire de prévoir des structures et des fonctionnements sachant gérer de manière efficace ce mode commun. A cet effet, les premiers détecteurs infrarouges à haute sensibilité étaient refroidis à des températures très basses, de l'ordre de la centaine de degrés Kelvin, voire même quelques degrés Kelvin, afin de minimiser le mode commun.

Par ailleurs, il existe deux classes distinctes de détecteurs infrarouge, à savoir les détecteurs dit « quantiques » et les détecteurs dit « thermiques », notamment les détecteurs thermiques bolométriques. Comme cela est également bien connu, les principes physiques mis en oeuvre par ces deux types de détection sont fondamentalement différents et induisent leur propre problématique.

Dans le cas des détecteurs quantiques, un semi-conducteur est utilisé pour produire des paires électron-trou sous l'effet de l'absorption de photons dans le spectre infrarouge, les porteurs de charges ainsi créés étant collectés via des électrodes, le plus souvent combinées à une jonction de type PN.

Au contraire, dans le cas des détecteurs bolométriques, on met en oeuvre un matériau absorbant choisi pour sa capacité à convertir la puissance du flux infrarouge incident en chaleur. Ce matériau, ou un second matériau en contact avec le premier matériau, est également utilisé pour convertir la chaleur produite en une variation d'une caractéristique électrique, généralement une variation de résistance électrique. La variation de la caractéristique électrique est ensuite mesurée.

Dans le but de gérer le mode commun, il a été conçu une architecture particulière de détecteur bolométrique, à savoir un détecteur qui comporte une matrice de micro-planches bolométriques suspendue au dessus d'un substrat dit « de lecture » à l'aide de bras de soutien et d'isolation thermique.

Comme cela est connu en soi, cette architecture est spécifiquement prévue pour isoler thermiquement les éléments bolométriques du substrat, qui est la principale source du mode commun en raison de sa localisation très proche. Ce faisant, on obtient d'une part un gain important en termes de sensibilité, et d'autre part cette architecture permet également de s'affranchir d'un refroidissement à très basse température.

Si une architecture à base de micro-planches suspendues présente de nombreux avantages, et tout particulièrement la possibilité d'être utilisée sans refroidissement à de très basses températures, la présence des bras de soutien des micro-planches bolométriques ne permet pas d'obtenir un facteur de remplissage satisfaisant à l'aide des techniques courantes de fabrication, le facteur de remplissage étant d'autant plus mauvais que la miniaturisation des micro-planches est élevée.

Des solutions ont été développées pour augmenter le facteur de remplissage. Cependant, ces dernières impliquent une complexification des procédés de fabrication et des coûts plus élevés. Par exemple, le document US-A-6 094 127 décrit un détecteur à trois étages superposés avec notamment un étage comportant un circuit intégré, un étage de support et un étage d'absorption. L'étage d'absorption peut ainsi occuper la totalité de la surface du détecteur améliorant ainsi le rendement. Cependant, afin de connecter électriquement l'étage d'absorption à l'étage de support, un élément d'interconnexion électrique est intercalé entre les étages de support et d'absorption. Cet élément d'interconnexion électrique est constitué d'un canal conducteur enrobé dans une gaine diélectrique. Il en résulte un procédé de fabrication complexe et mettant directement en jeu la continuité électrique d'un étage à l'autre du détecteur, continuité qui est pourtant un élément crucial pour le fonctionnement optimal du détecteur. De plus, la présence de l'élément d'interconnexion électrique en contact avec l'étage d'absorption peut détériorer la qualité d'absorption et la sensibilité du détecteur.

Par ailleurs, afin d'améliorer le rendement des détecteurs et/ou afin de réduire les coûts de fabrication, des procédés de fabrication collective sont usuellement mis en oeuvre, plusieurs matrices de micro-planches étant fabriquées conjointement sur une même tranche de silicium (« *wafer* »), puis individualisées, comme cela est par exemple décrit dans les documents US-A-6 753 526 et US-A-6 924 485.

Etant donné que des procédés de fabrication collective sont déjà employés pour fabriquer les matrices de micro-planches, des procédés de fabrication collective issus de la microélectronique sont également employés pour réaliser des détecteurs intégrant directement un packaging sous vide pour chaque micro-planche, comme cela est par exemple décrit dans les documents susmentionnés. Ce packaging, communément appelé « *micro-packaging hermétique intégré* », est constitué d'une capsule réalisée au dessus de chaque micro-planche et prenant appui sur le substrat de chaque côté de celle-ci et scellée hermétiquement sous vide. La réalisation collective des étapes de packaging permet ainsi de réduire les temps et les coûts de production des détecteurs par rapport à un seul boitier hermétique réalisé individuellement pour chaque matrice de micro-planches.

Cependant, l'espace nécessaire entre chaque micro-planche pour l'appui des capsules se traduit, à taille de matrice égale, par une baisse significative de la surface optiquement active du détecteur, et donc par une baisse directe du rendement du détecteur.

Ainsi donc, par construction, la surface utile d'une micro-planche bolométrique suspendue par des bras de soutien, dédiée à la détection d'un rayonnement infrarouge ou térahertz est limitée par rapport à la surface de substrat, ce qui réduit la sensibilité du détecteur.

Par exemple, la réalisation de détecteurs avec des micro-planches carrées de 12 μm de côté, dimensions qui constituent à l'heure actuelle le degré maximum de miniaturisation des micro-planches bolométriques, et absorbant autour de λ = 10 μm, nécessite pour chaque micro-planche une surface de substrat carrée d'au moins 17 μm de côté. La surface utile d'une matrice de micro-planches de 12 μm de côté, dédiée à la détection, représente donc au plus 50% de la surface totale de la matrice.

## EXPOSE DE L'INVENTION

Le but de la présente invention est de résoudre le problème susmentionné de sensibilité réduite en raison d'une surface utile réduite dans des détecteurs bolométriques à base de micro-planches suspendues.

A cet effet, l'invention a pour objet un détecteur bolométrique matriciel pour la détection d'un rayonnement électromagnétique dans une gamme prédéterminée de longueurs d'onde infrarouge ou térahertz, comprenant :

- un substrat ; et
- une matrice de micro-planches bolométriques pour la détection dudit rayonnement, suspendues au dessus du substrat à l'aide de bras de soutien.

Selon l'invention :

- le détecteur comporte une membrane métallique disposée au dessus et autour de chaque micro-planche, et dans laquelle sont formées des ouvertures ; et
- les ouvertures de la membrane métallique sont placées périodiquement au sein de celle-ci le long d'au moins un axe prédéterminé selon une période inférieure ou égale à $\frac{\lambda}{n}$,, où λ est une longueur d'onde de la gamme de longueurs d'onde à détecter et *n* est l'indice de réfraction moyen du milieu séparant la micro-planche de la membrane métallique.

En d'autres termes, la membrane métallique induit un phénomène de résonnance du rayonnement électromagnétique, qui concentre le rayonnement sous la membrane métallique et donc sur la micro-planche, cette dernière absorbant donc plus de rayonnement.

Dans la description qui suit, et comme il est usuellement admis dans le domaine, le terme pixel, lorsqu'il se réfère à la matrice de détection, se comprend comme l'ensemble des éléments matériels produisant un signal de sortie relatif à un point d'image, ainsi qu'à la surface dédiée à ces éléments.

Selon un mode de réalisation de l'invention, la largeur des ouvertures selon le ou chaque axe prédéterminé augmente depuis un emplacement de la membrane métallique, positionné au dessus d'une zone centrale de la micro-planche, en direction de la périphérie de la membrane métallique.

En d'autres termes l'agencement et la forme des ouvertures mettent en oeuvre une focalisation du rayonnement incident sur la micro-planche bolométrique. Comme la membrane métallique s'étend au-delà de la micro-planche, une partie du rayonnement incident sur la portion de membrane métallique qui n'est pas à l'aplomb de la micro-planche est « redirigée » vers celle-ci. La surface utile dédiée à la détection du rayonnement est donc augmentée, et corollairement, la sensibilité globale du détecteur est optimisée. En outre, cet effet est obtenu sans que le ratio entre la surface des micro-planches et la surface totale de la matrice de micro-planche ne soit sensiblement modifié

Plus particulièrement, la largeur des ouvertures audit emplacement de la membrane vérifie la relation $0,25 < \frac{W_0}{P} < 0,75$ , où $W_0$ est la largeur audit emplacement et *P* la période selon l'axe prédéterminé, l'écart de largeur entre deux ouvertures adjacentes étant compris entre $\frac{\lambda}{200 \times n}$ et $\frac{\lambda}{20 \times n}$.

Préférentiellement, la largeur des ouvertures audit emplacement est sensiblement égale à Préférentiellement, l'écart de largeur entre deux ouvertures adjacentes est sensiblement égal à $\frac{\lambda}{100 \times n}$.

Selon un mode de réalisation de l'invention, la largeur des ouvertures est constante et comprise entre

$$0,25 < \frac{W_0}{P} < 0,75,$$ où $W_0$ est la largeur des fentes et *P* est la période selon l'axe prédéterminé.

Selon un mode de réalisation de l'invention, la membrane métallique est positionnée au dessus de la micro-planche à une distance inférieure à $\frac{\lambda}{4 \times n}$, ce qui optimise la focalisation sur la micro-planche.

Selon un mode de réalisation de l'invention, la période *P* est sensiblement égale à $\frac{\lambda}{4 \times n}$, ce qui maximalise l'absorption du rayonnement par la micro-planche.

Selon un mode de réalisation de l'invention, la membrane métallique présente une épaisseur inférieure à $\frac{\lambda}{4 \times n}$, et préférentiellement une épaisseur sensiblement égale à

$\frac{\lambda}{10 \times n}$. De cette manière, l'absorbation du rayonnement par la membrane métallique est réduite. Notamment, une telle épaisseur empêche que le rayonnement ne soit trop fortement piégé dans la membrane, et donc qu'une quantité trop importante de rayonnement ne soit absorbée par celle-ci.

Selon un mode de réalisation, la membrane métallique repose sur une couche de support au moins partiellement transparente à la gamme de longueurs d'onde à détecter, notamment une couche diélectrique ou semi-conductrice.

Selon une première variante de l'invention, les ouvertures de la membrane métallique sont également réalisées dans la couche de support.

Selon une seconde variante de l'invention, la couche de support est pleine, et forme avec des parois latérales de soutien entourant la micro-planche, une enceinte hermétique dans laquelle est positionnée la micro-planche. Ainsi par exemple, la membrane métallique peut être formée sur le capot déjà existant d'une capsule hermétique

Selon un mode de réalisation de l'invention, la membrane métallique est soutenue par une structure prenant appui sur les bras de soutien de la micro-planche, ce qui réduit l'encombrement de la structure de soutien de la membrane métallique.

Selon un mode de réalisation, les ouvertures de la membrane métallique sont constituées par des fentes parallèles, de sorte que la détection par la texturation est sensible à une seule polarisation.

En variante, les ouvertures de la membrane métallique sont carrées ou circulaires. De cette manière, la détection par la texturation est insensible à la polarisation du rayonnement incident.

Selon un mode de réalisation, la membrane métallique est constituée d'aluminium, de titane, de nitrure de titane, de cuivre ou de tungstène.

## BREVE DESCRIPTION DES FIGURES

La présente invention sera mieux comprise à la lecture de la description qui va suivre, donnée uniquement à titre d'exemple, et réalisée en relation avec les dessins annexés, dans lesquels des références identiques désignent des éléments identiques ou analogues, et dans lesquels :

- la figure 1 est une vue schématique de dessus d'une matrice de trois pixels bolométriques par trois pixels bolométriques pourvus de membranes focalisatrices selon un premier mode de réalisation de l'invention ;
- la figure 2 est une vue schématique en section de la matrice de la figure 1 selon l'axe A-A ;
- la figure 3 est une vue schématique simplifié en section d'un pixel de la matrice de la figure 1 ;
- la figure 4 est une cartographie de l'intensité du champ électromagnétique en présence d'une membrane focalisatrice selon l'invention dans un plan normal à celle-ci ;
- la figure 5 est un tracé de courbes d'absorption dans une micro-planche en TiN pour différentes distances entre celle-ci et la membrane focalisatrice ;
- la figure 6 est une vue de dessus d'un autre mode de réalisation de la membrane focalisatrice selon l'invention ;
- les figures 7 à 12 sont des vues schématiques en coupe illustrant un procédé de fabrication d'une structure de soutien de membrane focalisatrice selon un premier mode de réalisation ;
- les figures 13 à 15 sont des vues schématiques en coupe illustrant un procédé de fabrication d'une structure de soutien de membrane focalisatrice selon un deuxième mode de réalisation ;
- les figures 16 à 19 sont des vues schématiques en coupe illustrant un procédé de fabrication d'une structure de soutien de membrane focalisatrice selon un troisième mode de réalisation ;
- les figures 20 et 21 sont respectivement des vues de dessus d'une matrice de micro-planches avec des bras de soutien individuels et d'une matrice de micro-planches avec des bras de soutien communs ; et
- les figures 22 à 27 sont des vues schématiques en coupe illustrant un procédé de fabrication d'une structure de soutien de membrane focalisatrice selon un quatrième mode de réalisation.

## DESCRIPTION DETAILLEE DE L'INVENTION

En se référant aux figures 1 et 2, il est illustré à titre d'exemple une matrice de détection bolométrique **10** de trois pixels par trois pixels selon un premier mode de réalisation de l'invention.

Chaque pixel **12** comporte une micro-planche bolométrique **14,** suspendue au-dessus d'un substrat **16** par des bras de soutien et d'isolation thermique **18,** et permettant la détection d'un rayonnement électromagnétique incident « *IR* » dans une gamme de longueurs d'onde infrarouge comprises entre 0,75 µm et 1.000 µm et/ou dans une gamme de longueurs d'onde térahertz comprises entre 1 mm et 3 mm.

Comme cela est connu en soi, la micro-planche **14** s'échauffe sous l'action du rayonnement incident *IR* et voit sa résistance électrique varier en fonction de son échauffement. Un même matériau peut être utilisé pour mettre en oeuvre ces deux fonctions, comme du TiN par exemple, qui est adapté à la détection des longueurs d'onde dans l'infrarouge moyen.

Les bras de soutien et d'isolation thermique **18** sont, quant à eux, constitués majoritairement d'un matériau peu conducteur de la chaleur, mais comportent un élément conducteur électrique permettant de soumettre la micro-planche **14** à une tension et/ou un courant de polarisation pour la mesure de sa résistance électrique. Les bras **18** sont électriquement connectés à un circuit de lecture agencé dans le substrat **16** qui pilote la polarisation de la micro-planche **14.**

Chaque pixel **12** comporte par ailleurs un réflecteur plan **20** formé à partir d'une couche de métal déposée sur le substrat **16,** et disposée sous la micro-planche **14.** Le réflecteur **20** a pour fonction de réfléchir la portion de rayonnement ayant traversé la micro-planche **14** sans être absorbée, permettant ainsi au moins un double passage du rayonnement dans la micro-planche, voire un phénomène de résonnance lorsque la distance entre la micro-planche **14** et le réflecteur **20** est réglée par exemple de manière à former une lame quart d'onde.

Dans le cadre de l'invention, la structure et le fonctionnement des micro-planches bolométriques **14** importent peu, n'importe quel type de micro-planche pouvant être envisagé, comme par exemple celui décrit dans le document FR 2 752 299. On retiendra seulement que l'invention s'applique à toute matrice bolométrique, dont la surface des micro-planches est réduite vis-à-vis de la surface des pixels.

Avantageusement, chaque pixel **12** comporte également une membrane métallique **22,** suspendue au dessus de la micro-planche **14** par une structure de soutien **24** qui est formée sur le substrat **16** à mi-distance entre le pixel **12** et les pixels adjacents à celui-ci. La membrane métallique **22** est par exemple constituée d'aluminium, de titane, de nitrure de titane, de cuivre ou de tungstène, qui sont des métaux permettant une fabrication aisée de la membrane **22.**

Dans l'exemple illustré, la micro-planche **14** et la membrane **22** sont rectangulaires et centrées l'une sur l'autre.

La structure de soutien **24,** par exemple sous la forme de parois latérales, entoure la micro-planche **14,** les bras de soutien ainsi que la surface $\mathbf{S_{16}}$ du substrat **16** dédiée au pixel **12,** de sorte que la membrane métallique **22** recouvre sensiblement toute la surface du pixel **12.** Notamment, la membrane métallique **22** recouvre sensiblement toute la surface $\mathbf{S_{16}}$-$\mathbf{S_{14}}$ du pixel **12** non couverte par la micro-planche **14.**

La membrane **22** comporte par ailleurs un ensemble de fentes rectilignes parallèles à section rectangulaire, réalisées sur toute la largeur de la membrane **22,** les fentes **26** étant agencées pour focaliser un rayonnement <u>*IR*</u> incident sur la membrane **22** sur la micro-planche **14,** et notamment le rayonnement incident sur la portion de membrane **22** qui n'est pas disposée au dessus de la micro-planche **14.**

En se référant à la figure 3, les fentes **26** sont régulièrement placées selon la direction <u>*X*</u> perpendiculaire à celles-ci, les axes médians des fentes **26** étant positionnés selon une période <u>*P*</u> constante. Cette période, choisie en fonction d'une longueur d'onde λ à focaliser sur la micro-planche **14,** est inférieure à $\frac{\lambda}{n}$, où *n* est l'indice de réfraction du milieu séparant la micro-planche **14** de la membrane métallique **22,** usuellement de l'air sous une pression réduite. La période <u>*P*</u> est de préférence sensiblement égale à $\frac{\lambda}{4\times n}$, cette valeur maximalisant l'absorption du rayonnement par la micro-planche **14.**

Par ailleurs, la largeur <u>*W*</u> des fentes **26** selon la direction <u>*X*</u> augmente depuis le centre de la membrane **22,** c'est-à-dire, dans l'exemple illustré, depuis l'emplacement de la membrane **22** à l'aplomb du centre de la micro-planche **14,** en direction de la périphérie de la membrane **22,** de manière à focaliser le rayonnement incident sur la membrane **22** dans un espace central sous la membrane **22,** ce qui permet d'augmenter la quantité de rayonnement « vue » par la micro-planche **14** et donc absorbée par celle-ci.

Avantageusement, l'écart ($\underline{W_{n+1}}$ - $\underline{W_n}$) entre les largeurs $\underline{W_n}$ et $\underline{W_{n+1}}$ de deux fentes adjacentes est compris entre $\frac{\lambda}{200\times n}$ et $\frac{\lambda}{20\times n}$.

De préférence, l'écart est sensiblement égal à $\frac{\lambda}{100\times n}$, cette valeur maximalisant l'absorption du rayonnement par la micro-planche **14.**

Avantageusement, l'augmentation de largeur à mesure que l'on s'éloigne du centre de la membrane **22** est constante, la largeur des fentes augmentant donc linéairement. Il est toutefois possible de prévoir une augmentation non linéaire de la largeur des fentes.

Avantageusement encore, la largeur $\underline{W_0}$ de la

fente centrale vérifie la relation $0,25 < \frac{\breve{W}_0}{P} < 0,75$, et est de préférence sensiblement égale à $\frac{P}{2}$. Pour une période $\underline{P}$ égale à $\frac{\lambda}{4 \times n}$, la largeur $\underline{W_0}$ est donc égale à $\frac{\lambda}{8 \times n}$, c'est-à-dire très faible. La largeur des fentes **26,** bien qu'augmentant depuis le centre vers la périphérie de la membrane **22,** reste donc faible compte tenu de la valeur de l'incrément de largeur ($\underline{W_{n+1}}$- $\underline{W_n}$).

Avantageusement encore, l'épaisseur $\underline{h}$ de la membrane métallique **22** est inférieure à $\frac{\lambda}{4 \times n}$, et préférentiellement sensiblement égale à $\frac{\lambda}{10 \times n}$. Une telle épaisseur faible empêche que le rayonnement ne soit trop fortement piégé dans la membrane **22,** et donc qu'une quantité trop importante de rayonnement ne soit absorbée par celle-ci.

Avantageusement encore, la membrane métallique **22** est positionnée au dessus de la micro-planche **14** à une distance $\underline{l}$ inférieure à $\frac{\lambda}{4 \times n}$, cette distance pouvant être nulle avec la membrane **22** reposant sur la micro-planche **14.** Avec une distance $\underline{l}$ inférieure à $\frac{\lambda}{4 \times n}$, on observe alors un phénomène de couplage évanescent entre les fentes **26** de la membrane *22* et la micro-planche *14,* ce qui augmente de manière significative l'absorption du rayonnement à la longueur d'onde λ.

La figure 4 est une cartographie de l'intensité du champ électromagnétique en présence d'une membrane focalisatrice *22,* et dans un plan perpendiculaire à celle-ci selon la direction X, ladite membrane *22* étant éclairée par un rayonnement infrarouge dans la gamme 3 - 15 µm. Les abscisses représentent ladite direction $\underline{X}$ et ont pour origine le bord droit de la membrane **22,** et les ordonnées représentent la direction perpendiculaire à la direction X dans ledit plan et ont pour origine la face inférieure de la membrane **22 :**

- la membrane **22** est réglée sur la longueur d'onde 12,5 µm :
- la période $\underline{P}$ est de 2,8 µm,
- la largeur $\underline{W_0}$ de la fente centrale est égale à 1,4 µm,
- l'incrément de largeur ($\underline{W_{n+1}}$ - $\underline{W_n}$) entre deux fentes voisines est égal à 100 nm, et
- l'épaisseur $\underline{h}$ de la membrane **22** est égale à 200 nm ;
- la largeur du pixel selon la direction $\underline{X}$ est de 25 µm, et
- la largeur de la micro-planche **14** selon cette même direction est de 7 µm.

La membrane **22** et la micro-planche **14** sont placées dans l'air. La micro-planche **14** est ici représentée, à titre d'exemple, à une distance $\underline{l}$ de la membrane **22** égale à 2 µm, l'intervalle préférentiel [$\underline{l}$] pour ces distances étant également représenté.

Comme cela est parfaitement visible sur la figure 4, on observe un renforcement de l'intensité du champ électromagnétique infrarouge sous la membrane **22,** et notamment un renforcement maximum dans une zone centrale **30** sous la membrane **22.**

La figure 5 est un tracé de courbes d'absorption dans la micro-planche **14** en TiN dans la gamme 6 - 15 µm pour différentes distances $\underline{l}$ et dans le cadre des exemples numériques de la figure 4. A titre de comparaison, l'absorption de la micro-planche **14** en absence de membrane focalisatrice **22** est illustrée par la courbe « A ».

La courbe « B » est l'absorption de la micro-planche **14** pour une distance $\underline{l}$ à la membrane **22** égale à 2,5 µm, la courbe « C » est l'absorption pour une distance $\underline{l}$ égale à 1,5 µm, la courbe « D » est l'absorption pour une distance $\underline{l}$ égale à 1 µm, et la courbe « E » est l'absorption pour une distance $\underline{l}$ égale à 0,5 µm.

Comme il est possible de le constater, on observe un renforcement sensible de l'absorption pour une large gamme de longueurs d'onde, ce renforcement étant proche de 50% du maximum du pic d'absorption. Par ailleurs, on note également que le pic d'absorption entre 10 µm et 15 µm est très peu modifié pour des valeurs $\underline{l}$ inférieure à 1 µm, c'est-à-dire des valeurs inférieures à $\frac{\lambda}{10 \times n}$.

Il a été décrit un mode de réalisation dans lequel des fentes rectilignes parallèles sont réalisées dans la membrane *22,* ce qui permet une sélectivité en polarisation de la focalisation mise en oeuvre par la membrane *22.* Notamment, c'est la lumière polarisée perpendiculairement aux fentes dans le plan de la membrane *22* qui est focalisée.

Il peut cependant être souhaité que la focalisation soit appliquée à plusieurs polarisations de la lumière.

En variante, les ouvertures de la membrane focalisatrice **22** sont disposées régulièrement selon plusieurs directions différentes dans le plan de la membrane. Comme cela est par exemple illustré à la figure 6, deux réseaux de fentes croisées **32, 34** sont disposées régulièrement respectivement selon l'axe $\underline{X}$ et l'axe $\underline{Y}$, les réseaux présentant un incrément de largeur identique. Un tel agencement permet une détection identique des polarisations de la lumière selon les axes $\underline{X}$ *et* $\underline{Y}$. Bien entendu, d'autres configurations sont possibles en fonction des applications visées. Tout d'abord, la période selon l'axe $\underline{X}$ peut être différente de la période selon l'axe *Y*. De même, il est possible de prévoir un incrément de largeur selon l'axe *X* qui soit différent de celui de l'axe *Y*. De même, il est possible de prévoir des axes *X* et *Y* non perpendiculaires, et/ou des fentes selon un ou plusieurs axes supplémentaires. En variante également, il est possible de prévoir, en lieu et place des réseaux de fentes, des ouvertures rectangulaires, carrées, circulaires ou autres, pratiquées dans l'épaisseur de la membrane focalisatrice. Là encore, il est possible de définir des axes dans le plan de la membrane selon lesquels ces ouvertures sont régulièrement espacées avec des largeurs selon lesdits axes qui augmentent à mesure que l'on s'approche des bords de la membrane.

Il va à présent être décrit plusieurs modes de réalisation, ainsi que leur procédé de fabrication associé, concernant la structure de suspension de la membrane focalisatrice.

Les figures schématiques en coupe 7 à 12 illustrent un procédé de fabrication d'un premier mode de réalisation de la structure de suspension.

Le procédé débute par la fabrication, sur le substrat **16,** de la matrice de micro-planches **14,** des bras de soutien **18** et des réflecteurs **20.** Cette étape de fabrication est classique, et comme cela est connu en soi, les micro-planches **14** sont réalisées sur une couche sacrificielle **40** déposée sur le substrat **16** (figure 7).

Une fois les micro-planches **14** formées, le procédé se poursuit en déposant une deuxième couche sacrificielle **42** sur la première couche sacrificielle **40,** les micro-planches **14** et les bras de soutien **18.** L'épaisseur de la deuxième couche **42** est égale à la distance *l* désirée entre la membrane focalisatrice **22** et la micro-planche **14** (figure 8). La deuxième couche **42** est, par exemple, déposée au moyen d'une technique de dépôt à la tournette (plus connu sous l'expression anglo-saxonne de « *spin coating* »), et est constituée avantageusement du même matériau que la première couche **40,** notamment un polyimide, un polymère par exemple à base de BCB (benzocyclobutène), une résine photosensible recuite ou autres. Les première et deuxième couches **40, 42** forment ensemble une couche sacrificielle globale **44.**

Une gravure de la couche sacrificielle **44** est alors réalisée jusqu'au substrat **16** pour dégager une tranchée **46** tout autour de chaque micro-planche **14** et de ses bras de soutien **18** à l'emplacement souhaité pour la structure de soutien de la membrane focalisatrice, par exemple une tranchée formée à la limite de la surface de substrat **16** dédiée à la micro-planche **14** (figure 9). Les tranchées **46** sont avantageusement réalisées par gravure sèche par ions réactifs (ou gravure « RIE » pour « *reactive ion etching* »), qui permet une grande anisotropie de la gravure, ou bien par une chimie de gravure à base d'oxygène.

Du métal est alors déposé pleine plaque de sorte que la couche sacrificielle **44** ainsi que les tranchées **46** sont recouvertes d'une couche focalisatrice **48** (figure 10). Ce dépôt est préférentiellement réalisé au moyen d'un dépôt chimique en phase vapeur (ou dépôt « CVD » pour « *chemical vapor deposition* ») qui permet une bonne conformité du dépôt de métal sur les flancs des tranchées **46.** La couche de métal **48,** constitutive dans ce mode de réalisation des membranes focalisatrices et de leurs structures de soutien, est réalisée en aluminium, en titane, en nitrure de titane, en cuivre ou en tungstène.

Une lithographie et une gravure, par exemple une gravure sèche du type RIE, sont ensuite mises en oeuvre pour réaliser les ouvertures **26** dans la couche métallique **48,** afin de former la membrane focalisatrice **22** de l'invention (figure 11). La lithographie et la gravure sont ici mises en oeuvre de manière connue en soi.

Enfin, la couche sacrificielle **44** est retirée, par exemple au moyen d'un plasma d'oxygène ou d'ozone (figure 12).

Le mode de réalisation est avantageux dans la mesure où le nombre d'étapes de fabrication est minimal.

Toutefois, en fonction du matériau choisi pour le substrat **16,** l'adhérence de couches métalliques sur le substrat **16,** et donc l'adhérence de la structure de soutien **24** sur le substrat **16,** et/ou la conformité du dépôt de certains métaux, peut être problématique, notamment en termes de fragilité mécanique de la structure **24.**

Un deuxième mode de réalisation de la structure de soutien et son procédé de fabrication sont décrits à présent en relation avec les figures schématiques en coupe 13 à 15.

Ce procédé débute par les mêmes étapes décrites en relation avec les figures 7 à 9, puis se poursuit par le dépôt pleine plaque d'un matériau semi-conducteur ou diélectrique, de sorte que la couche sacrificielle **44** et les tranchées **46** sont recouvertes d'une couche **50** dudit matériau (figure 13). A la différence toutefois du mode de réalisation précédent, l'épaisseur de la deuxième couche sacrificielle **42** déposée au dessus de la micro-planche **14** tient compte de l'épaisseur de la couche **50,** la somme des épaisseurs de la couche **42** et de la couche **50** étant égale à la distance *l* souhaitée entre la membrane focalisatrice **22** et la micro-planche **14.**

Le matériau de la couche **50** est avantageusement choisi pour être compatible avec le matériau du substrat **16,** notamment en termes d'adhérence et de conformité de dépôt.

Le matériau de la couche **50** est par ailleurs choisi pour être peu absorbant dans la gamme de longueurs d'onde à détecter. Par exemple, pour la gamme de longueurs d'onde infrarouge, le matériau de la couche **50** est du germanium, du silicium amorphe ou du Si-Ge, et pour la gamme de longueurs d'onde térahertz, le matériau de la couche **50** est un oxyde de silicium SiOx, du SiON ou du SiN.

Une fois la couche **50** déposée, de manière avantageuse au moyen d'un dépôt CVD, qui permet une bonne conformité du dépôt de matériau sur les flancs des tranchées **46,** le procédé se poursuit par le dépôt pleine plaque du matériau métallique constitutif de la membrane focalisatrice, par exemple l'un de ceux décrit précédemment, de manière à former une couche métallique **52** recouvrant la couche **50,** y compris dans les tranchées **46** (figure 14). Un dépôt CVD ou un dépôt physique en phase vapeur (ou dépôt « PVD » *pour* « *Physical Vapor Deposition* ») est par exemple mis en oeuvre.

Une lithographie et une gravure, par exemple une gravure sèche du type RIE, sont ensuite mises en oeuvre pour réaliser les ouvertures **26** dans la couche métallique **52** et la couche diélectrique ou semi-conductrice **50,** afin de former la membrane focalisatrice **22** de l'invention, et la couche sacrificielle **44** est retirée, par exemple au moyen d'un plasma d'oxygène ou d'ozone (figure 15).

On notera qu'à la différence des modes de réalisation précédents, une couche de matériau est présente entre la membrane **22** et la micro-planche **14.** Toutefois, compte tenu de la faible périodicité, la couche **50** se comporte comme une couche d'indice moyen homogène et ne perturbe pas de manière sensible la lumière.

Les relations décrites ci-dessus, qui sont fonction de l'indice de réfraction du milieu séparant la membrane focalisatrice **22** de la micro-planche **14,** restent donc valables. Dans le cas des modes de réalisation dans lesquels des couches de diélectrique et/ou semi-conductrices sont utilisées, l'indice de réfraction considéré dans ces relations est alors l'indice de réfraction moyen du milieu séparant la membrane **22** de la micro-planche **14.**

Un troisième mode de réalisation de la structure de soutien et son procédé de fabrication sont décrits à présent en relation avec les figures schématiques en coupe 16 à 19, ce troisième mode de réalisation permettant de fabriquer de manière conjointe une membrane focalisatrice et une capsule hermétique pour chaque micro-planche.

Ce procédé débute par les mêmes étapes décrites que celles décrites en relation avec la figure 13, et se poursuit par une lithographie et une gravure, par exemple une gravure sèche du type RIE, pour réaliser un évent de libération **54** dans la couche **50** jusqu'à la couche sacrificielle **44** (figure 16). La couche sacrificielle **44** est alors retirée, par exemple au moyen d'un plasma d'oxygène ou d'ozone appliqué au travers de l'évent de libération **54** (figure 17).

Le procédé se poursuit par le dépôt pleine plaque du matériau métallique constitutif de la membrane focalisatrice, par exemple l'un de ceux décrit précédemment, de manière à former une couche métallique **56** recouvrant la couche **50,** y compris dans les tranchées **46** et l'évent de libération **54** (figure 18). Un espace hermétique **60** est ainsi obtenu autour de la micro-planche **14** et des bras de soutien **18.** Le dépôt de la couche métallique **56** est réalisé par pulvérisation, dépôt CVD ou évaporation afin d'obtenir un vide poussé dans l'espace **60.** Il est ainsi obtenu un packaging hermétique intégré pour la micro-planche **14.**

Une lithographie et une gravure, par exemple une gravure sèche du type RIE, sont ensuite mises en oeuvre pour réaliser les ouvertures **26** dans la couche métallique **56,** afin de former la membrane focalisatrice **22** de l'invention (figure 19).

Il a été décrit des applications de la présente invention à des micro-planches bolométriques qui sont suspendues par des bras de soutien individuels, c'est-à-dire ne suspendant qu'une micro-planche à la fois. Une vue de dessus d'un exemple d'une matrice de micro-planches **14** avec des bras de soutien **18** individuels est représentée à la figure 20.

Il existe cependant des architectures dans lesquelles un bras de soutien suspend conjointement deux micro-planches adjacentes, comme illustré à la figure 21, qui est une vue de dessus d'une matrice de micro-planches avec des bras de soutien **18** communs.

On notera que du point de vue de l'espace de substrat nécessaire pour la réalisation d'une micro-planche, il est indifférent que les bras de soutien soient individuels ou bien communs, de sorte que ces architectures induisent toutes deux un taux de remplissage faible.

En revanche, avec des bras de soutien communs, il n'est pas possible de réaliser une structure de soutien pour une membrane focalisatrice formée d'une paroi latérale continue autour de la micro-planche et de ses bras de soutien, à la différence de l'architecture à bras de soutien individuels dans laquelle il existe une espace libre tout autour de chaque micro-planche et de ses bras. En outre, le bras de soutien a deux fonctions essentielles, à savoir la suspension mécanique de la micro-planche et l'isolation thermique de celle-ci. Ainsi, la structure de soutien d'une membrane focalisatrice doit au minimum être en relation thermique avec les bras de soutien. On comprend donc aisément que la fabrication de cette structure dans une architecture à base de bras de soutien commun est complexe dès lors que l'on souhaite faire reposer celle-ci sur le substrat.

Il va à présent être décrit, en relation avec les figures schématiques en coupe 22 à 27, un procédé de fabrication simple d'une membrane focalisatrice dans une architecture à base de bras de soutien communs.

Le procédé débute par la fabrication, sur le substrat **16,** de la matrice de micro-planches **14,** des bras de soutien communs **18** et des réflecteurs **20.** Cette étape de fabrication est classique, et comme cela est connu en soi, les micro-planches **14** sont réalisées sur une couche sacrificielle **40** déposée sur le substrat **16** (figure 22).

Une fois les micro-planches **14** formées, le procédé se poursuit en déposant une deuxième couche sacrificielle **42** sur la première couche sacrificielle **40,** les micro-planches **14** et les bras de soutien communs **18.** L'épaisseur de la deuxième couche **42** est égale à la distance *l* désirée entre la membrane focalisatrice **22** et la micro-planche **14** (figure 23). La deuxième couche **42** est par exemple déposée au moyen d'une technique de dépôt à la tournette (« *spin coating* »), et est constituée avantageusement du même matériau que la première couche **40,** notamment un polyimide, un polymère par exemple à base de BCB (benzocyclobutène), une résine photosensible recuite ou autres. Les première et deuxième couches **40, 42** forment ensemble une couche sacrificielle globale **44.**

Une étape de gravure de la couche sacrificielle **44** est alors mise en oeuvre pour former des tranchées **58** libérant au moins une portion des bras de soutien communs **18,** et plus exactement une portion, ou la totalité, de la structure verticale des bras **18** liée mécaniquement au substrat **16** (figure 24). Par exemple une gravure sèche du type RIE, qui permet une anisotropie élevée de la gravure, est mise en oeuvre.

Du métal, par exemple l'un de ceux décrit précédemment, est alors déposé pleine plaque de sorte que la couche sacrificielle **44** et les tranchées **58** sont recouvertes d'une couche métallique **60** (figure 25).

Une lithographie et une gravure, par exemple une gravure sèche du type RIE, sont ensuite mises en oeuvre pour réaliser les ouvertures **26** dans la couche métallique **60** afin de former la membrane focalisatrice **22** de l'invention (figure 26). Enfin, la couche sacrificielle **44** est retirée, par exemple au moyen d'un plasma d'oxygène ou d'ozone (figure 27).

Bien que seule la membrane focalisatrice soit réalisée dans le mode de réalisation décrit, il est également possible de prévoir une couche diélectrique et/ou semi-conductrice de manière analogue aux modes de réalisation décrits en relation avec les modes de réalisation des figures 13 à 19. De manière avantageuse, la couche supplémentaire sera constituée d'un matériau isolant thermiquement afin de perturber au minimum la fonction d'isolation thermique des bras de soutien communs.

De même, si l'application le nécessite, il est possible également de prévoir des structures de soutien de membrane focalisatrice qui prennent appui sur des bras de soutien individuels.

L'invention peut avantageusement être utilisée dans le cadre d'un micro-packaging hermétique intégré : une membrane focalisatrice, placée dans le plan supérieur du micro-packaging, permet ainsi de compenser la perte de surface optiquement active induite par les flancs du micro-packaging. On bénéficie ainsi de la baisse de coût de production permise par la réalisation collective du packaging tout en minimisant la baisse de rendement du détecteur nécessairement induite par ce type de packaging.

## Revendications

**1.** Détecteur bolométrique matriciel pour la détection d'un rayonnement électromagnétique dans une gamme prédéterminée de longueurs d'onde infrarouges ou térahertz, comprenant :

■ un substrat (16); et
■ une matrice de micro-planches bolométriques (14) pour la détection dudit rayonnement, suspendues au dessus du substrat à l'aide de bras de soutien (18), ***caractérisé*** :
■ en ce qu'il comporte une membrane métallique (22) disposée au dessus et autour de chaque micro-planche (14), et dans laquelle sont formées des ouvertures (26); et
■ en ce que les ouvertures (26) de la membrane métallique (22) sont placées périodiquement dans celle-ci le long d'au moins un axe prédéterminé selon une période inférieure ou égale à $\frac{\lambda}{n}$, où $\lambda$ est une longueur d'onde de la gamme de longueurs d'onde à détecter et $n$ est l'indice de réfraction moyen du milieu séparant la micro-planche (14) de la membrane métallique (22).

**2.** Détecteur bolométrique matriciel selon la revendication 1, ***caractérisé* en ce que** la largeur des ouvertures selon le ou chaque axe prédéterminé augmente depuis un emplacement de la membrane métallique (22), positionné au dessus d'une zone centrale de la micro-planche (14), en direction de la périphérie de la membrane métallique (22).

**3.** Détecteur bolométrique matriciel selon la revendication 2, ***caractérisé* en ce que** la largeur des ouvertures (26) audit emplacement de la membrane (22) vérifie la relation $0{,}25 < \frac{W_0}{P} < 0{,}75$, où $W_0$ est la largeur audit emplacement et $P$ est la période selon l'axe prédéterminé, l'écart de largeur entre deux ouvertures adjacentes étant compris entre $\frac{\lambda}{200 \times n}$ et $\frac{\lambda}{20 \times n}$.

**4.** Détecteur bolométrique matriciel selon la revendication 1, ***caractérisé* en ce que** la largeur des ouvertures est constante et comprise entre $0{,}25 < \frac{W_0}{P} < 0{,}75$, où $W_0$ est la largeur des fentes et P est la période selon l'axe prédéterminé.

**5.** Détecteur bolométrique matriciel selon l'une quelconque des revendications précédentes, ***caractérisé* en ce que** la membrane métallique (22) est positionnée au dessus de la micro-planche (14) à une distance inférieure à $\frac{\lambda}{4 \times n}$.

**6.** Détecteur bolométrique matriciel selon l'une quelconque des revendications précédentes, ***caractérisé* en ce que** la période $P$ est sensiblement égale

à $\frac{\lambda}{4 \times n}$.

**7.** Détecteur bolométrique matriciel selon l'une quelconque des revendications précédentes, ***caractérisé*** **en ce que** la membrane métallique (22) a une épaisseur inférieure à $\frac{\lambda}{4 \times n}$, et préférentiellement une épaisseur sensiblement égale à $\frac{\lambda}{10 \times n}$.

**8.** Détecteur bolométrique matriciel selon l'une quelconque des revendications précédentes, ***caractérisé*** **en ce que** la membrane métallique (22) repose sur une couche de support (50), au moins partiellement transparente à la gamme de longueurs d'onde à détecter, notamment une couche diélectrique ou semi-conductrice.

**9.** Détecteur bolométrique matriciel selon la revendication 8, ***caractérisé*** **en ce que** les ouvertures (26) de la membrane métallique (22) sont également réalisées dans la couche de support (50).

**10.** Détecteur bolométrique matriciel selon la revendication 8, ***caractérisé*** **en ce que** la couche de support (50) est pleine et forme, avec des parois latérales de soutien entourant la micro-planche, une enceinte hermétique (58) dans laquelle est positionnée la micro-planche (14).

**11.** Détecteur bolométrique matriciel selon l'une quelconque des revendications 1 à 7, ***caractérisé*** **en ce que** la membrane métallique (22) est soutenue par une structure prenant appui sur les bras de soutien (18) de la micro-planche (14).

**12.** Détecteur bolométrique matriciel selon l'une quelconque des revendications précédentes, ***caractérisé*** **en ce que** les ouvertures (26) de la membrane métallique sont des fentes parallèles.

**13.** Détecteur bolométrique matriciel selon l'une quelconque des revendications 1 à 11, ***caractérisé*** **en ce que** les ouvertures de la membrane métallique sont carrées ou circulaires.

**14.** Détecteur bolométrique matriciel selon l'une quelconque des revendications précédentes, ***caractérisé*** **en ce que** la membrane métallique (22) est constituée d'aluminium, de titane, de nitrure de titane, de cuivre ou de tungstène.

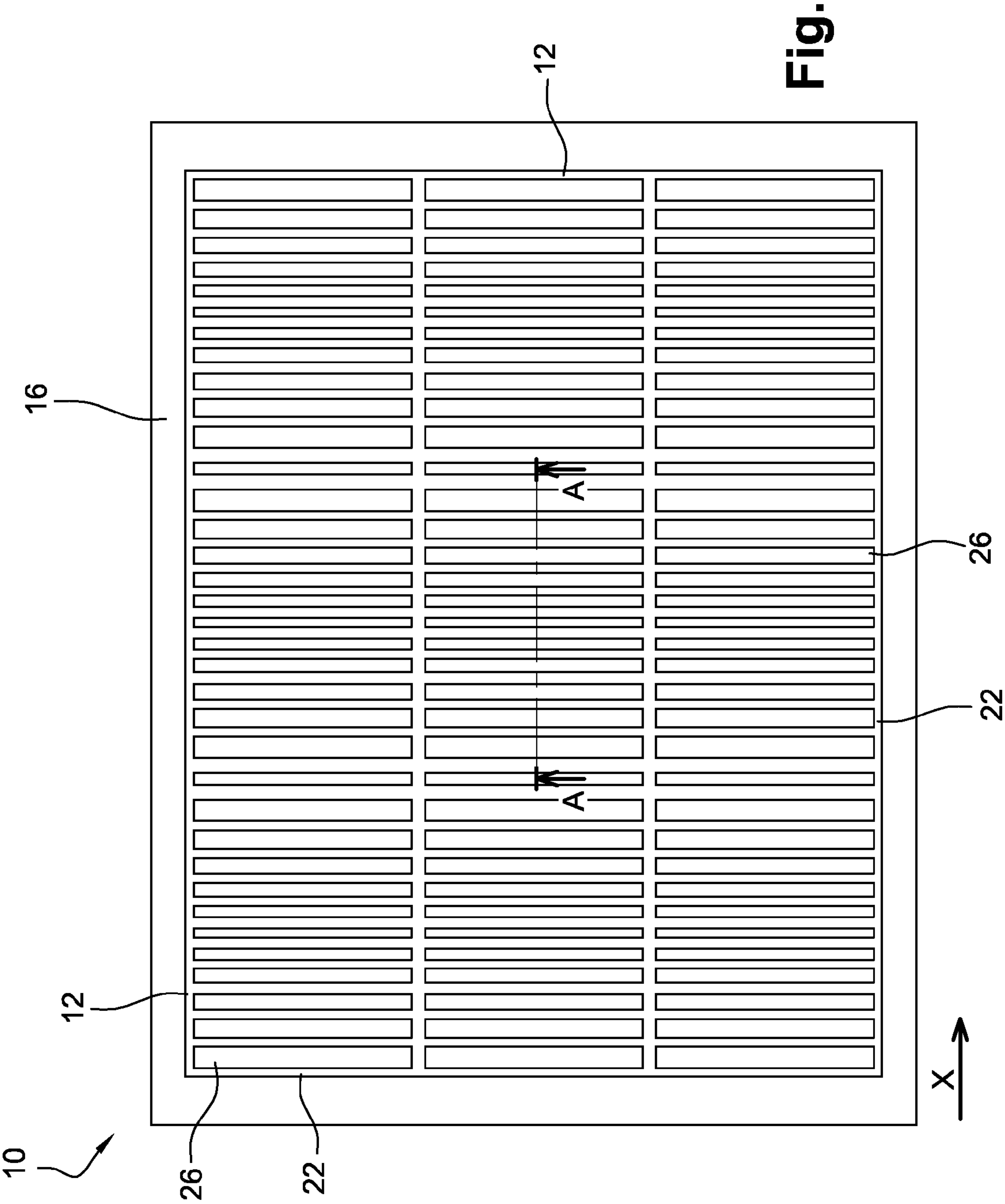


Fig. 1

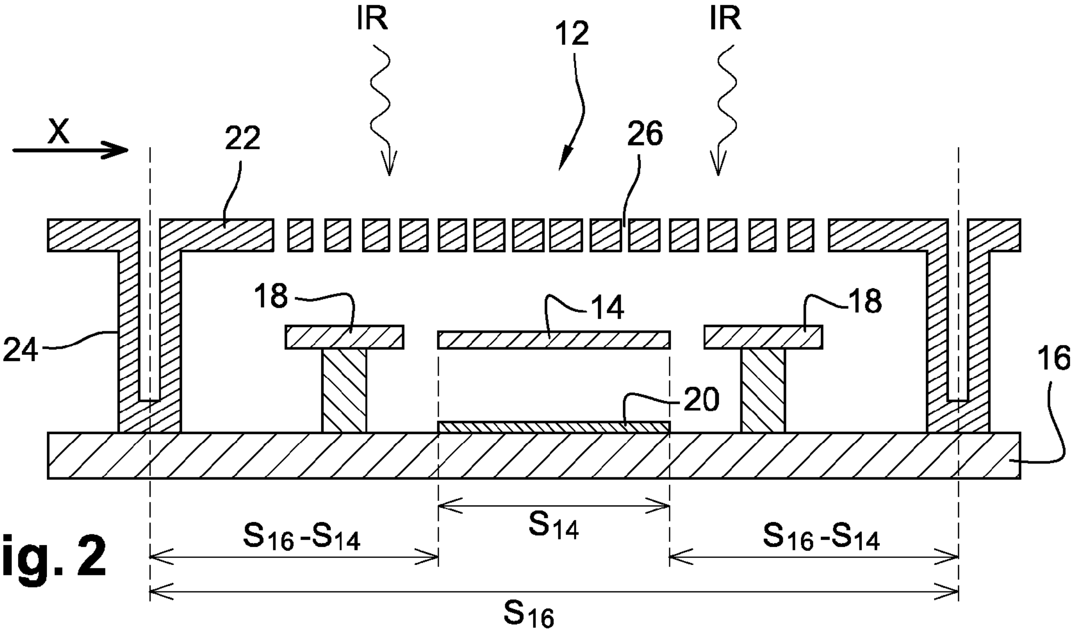
IR
12
IR
X
22
26
18
14
18
24
16
20
$S_{16}$-$S_{14}$
$S_{14}$
$S_{16}$-$S_{14}$
$S_{16}$

Fig. 2

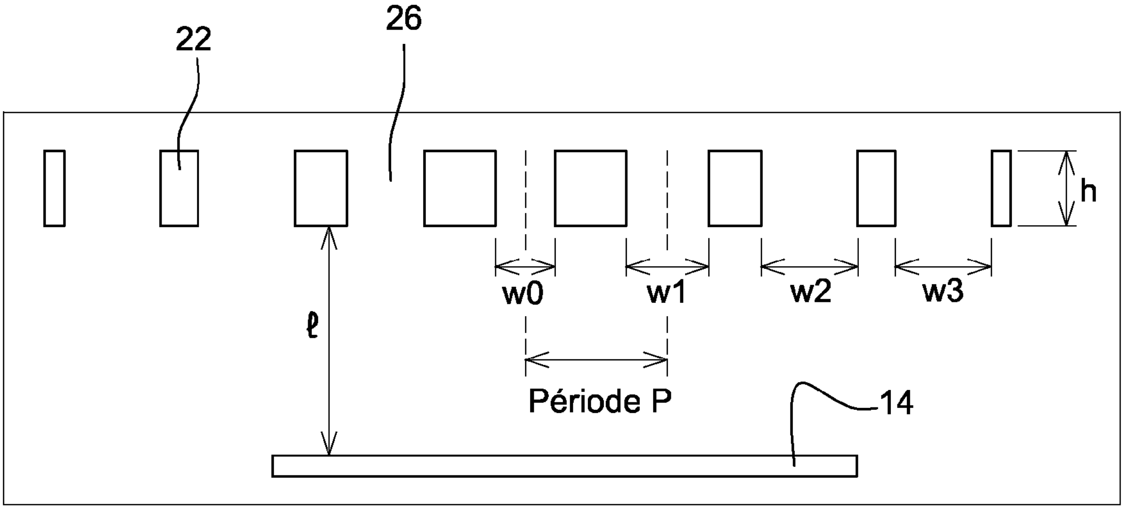
22
26
h
w0
w1
w2
w3
ℓ
Période P
14

Fig. 3

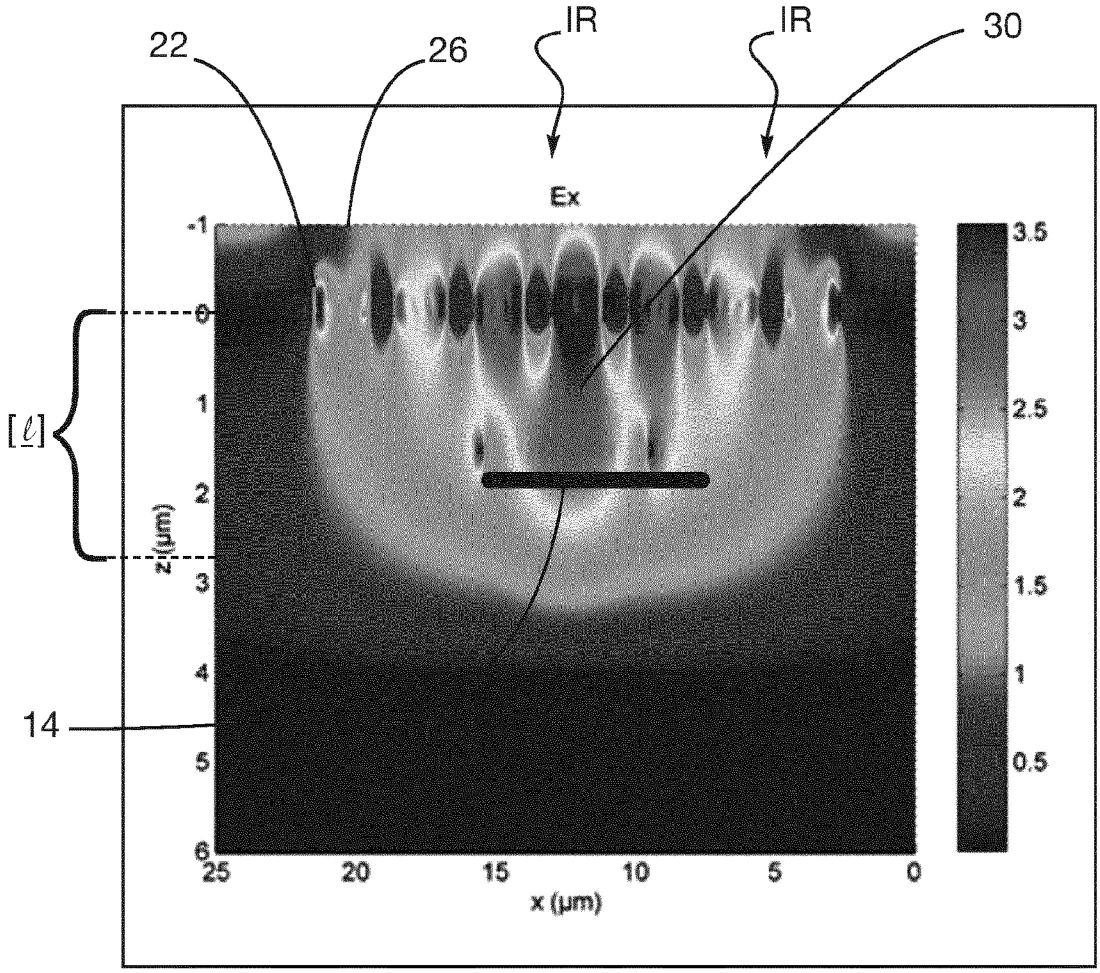
22
26
IR
IR
30
Ex
[ℓ]
14
z (µm)
x (µm)
-1
0
1
2
3
4
5
6
25
20
15
10
5
0
3.5
3
2.5
2
1.5
1
0.5

Fig. 4

Fig. 5

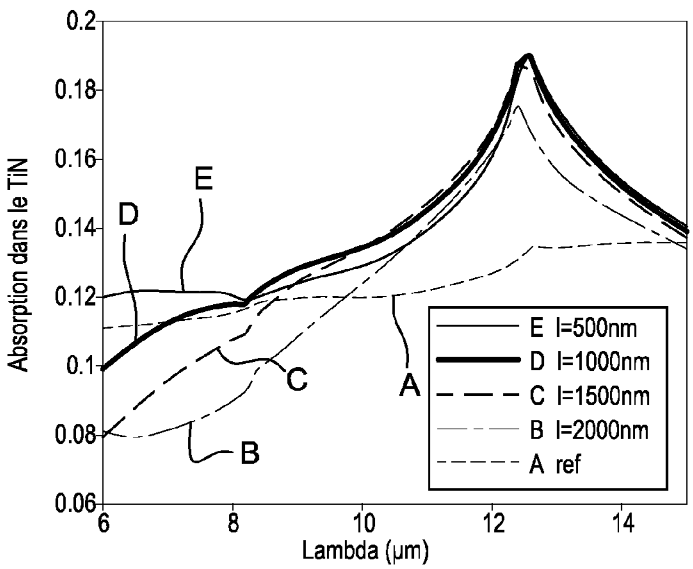


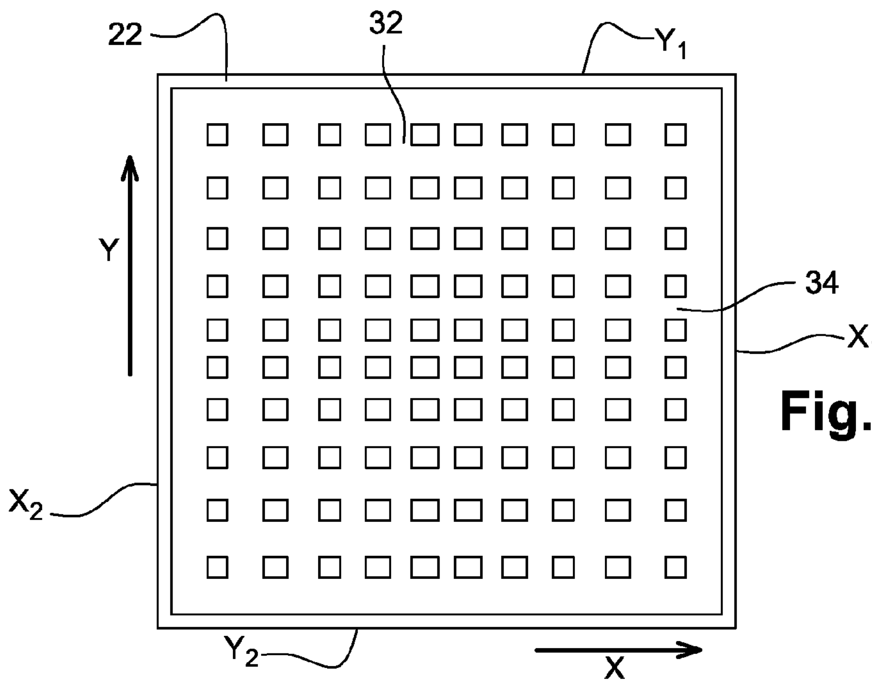


Fig. 6

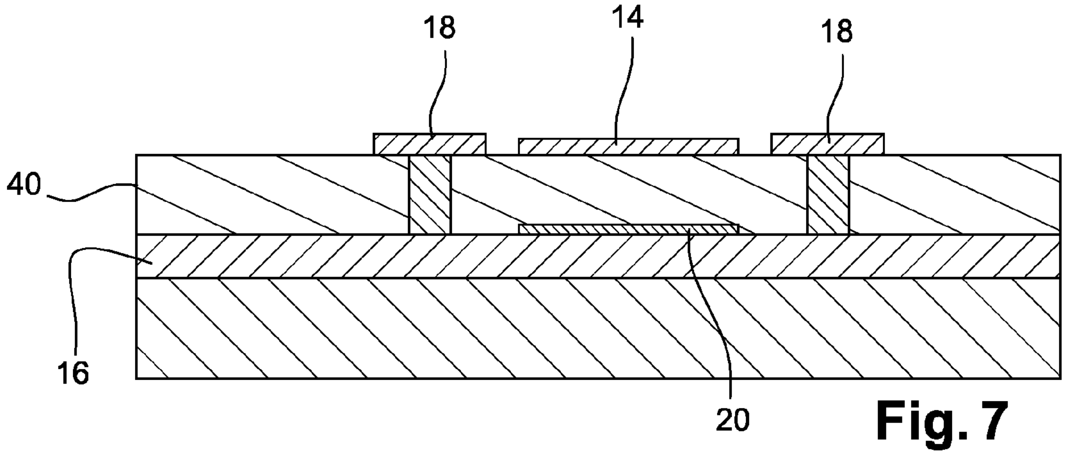


Fig. 7

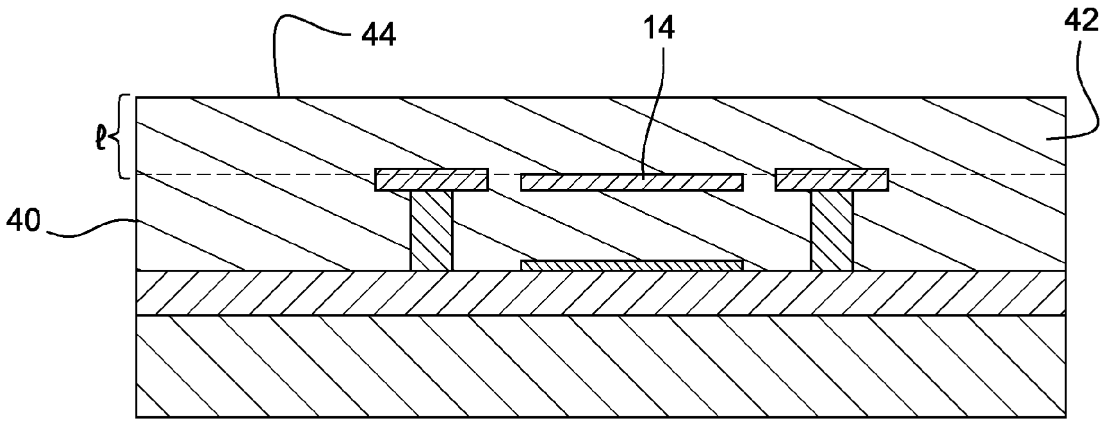


Fig. 8

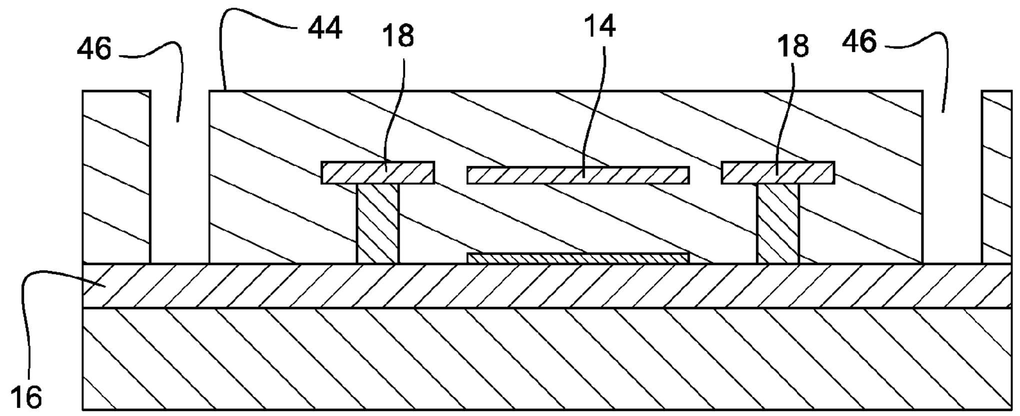


Fig. 9

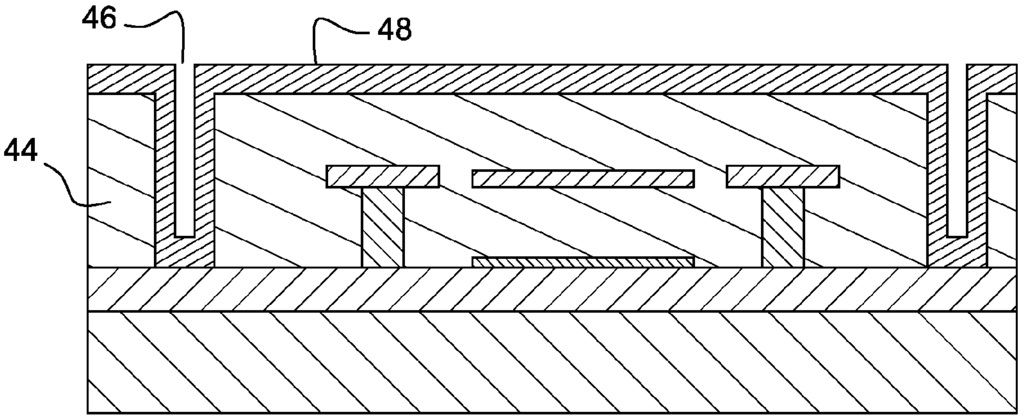


Fig. 10

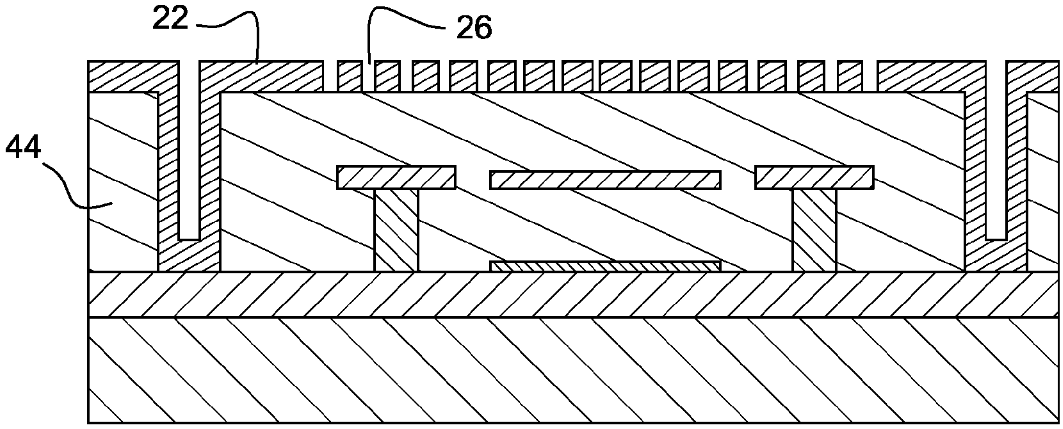


Fig. 11

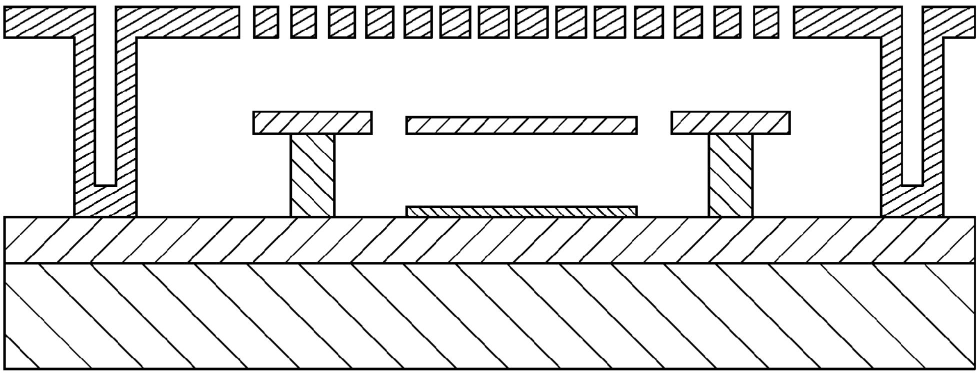

Fig. 12

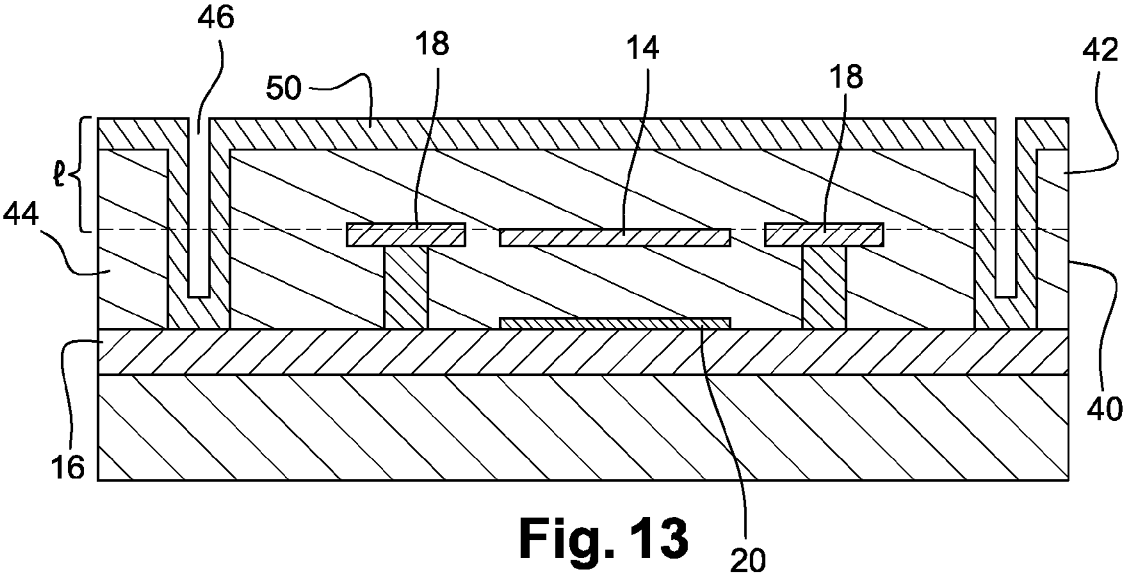


Fig. 13

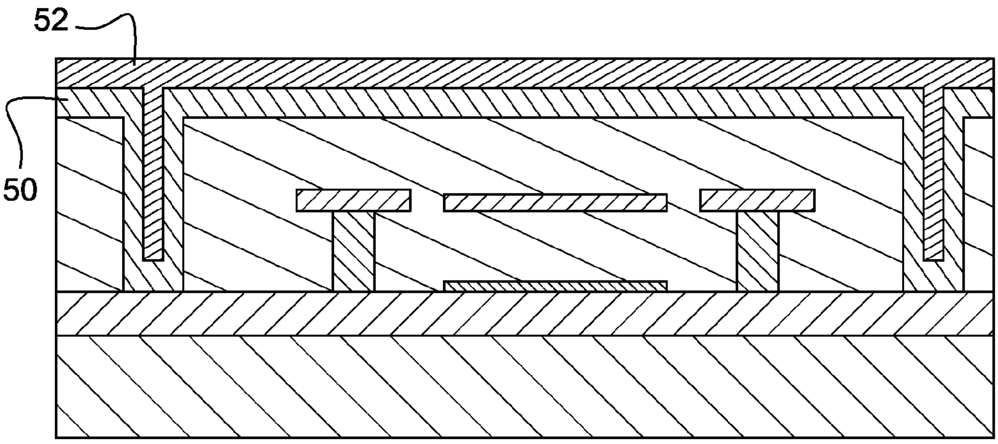


Fig. 14

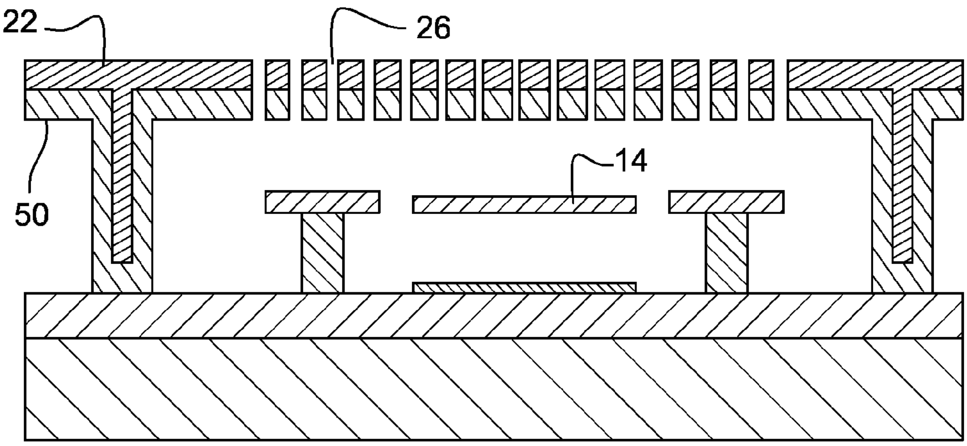


Fig. 15

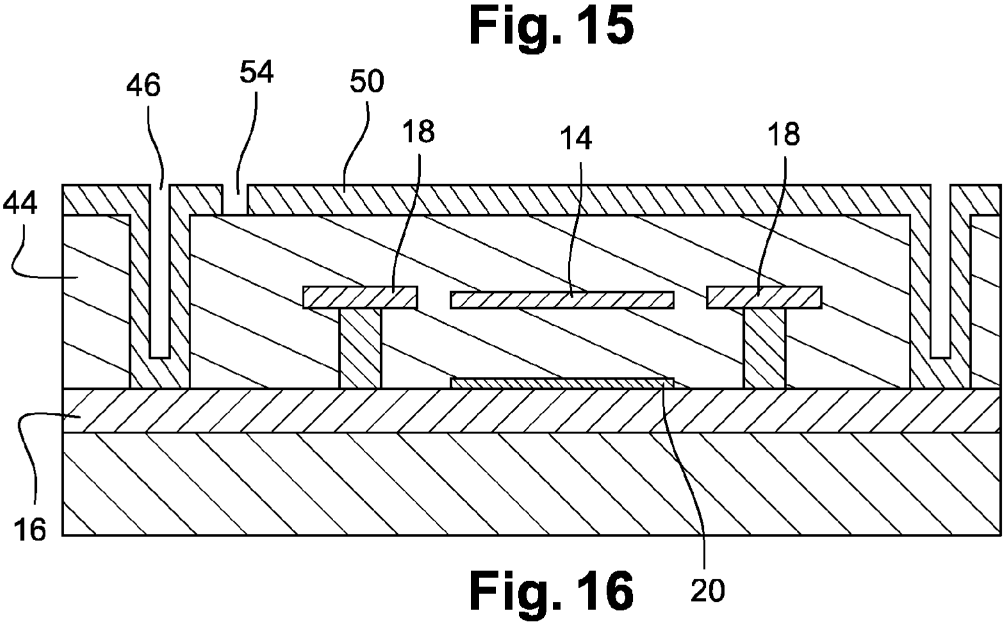


Fig. 16

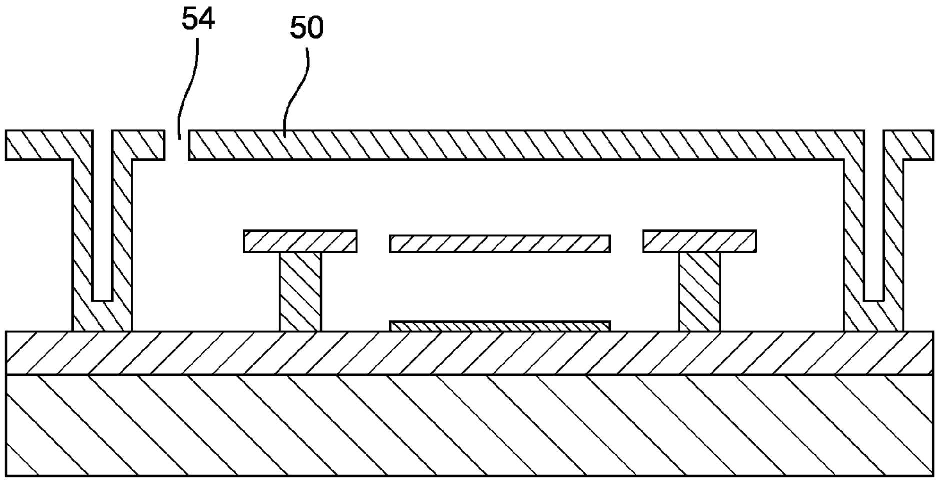


Fig. 17

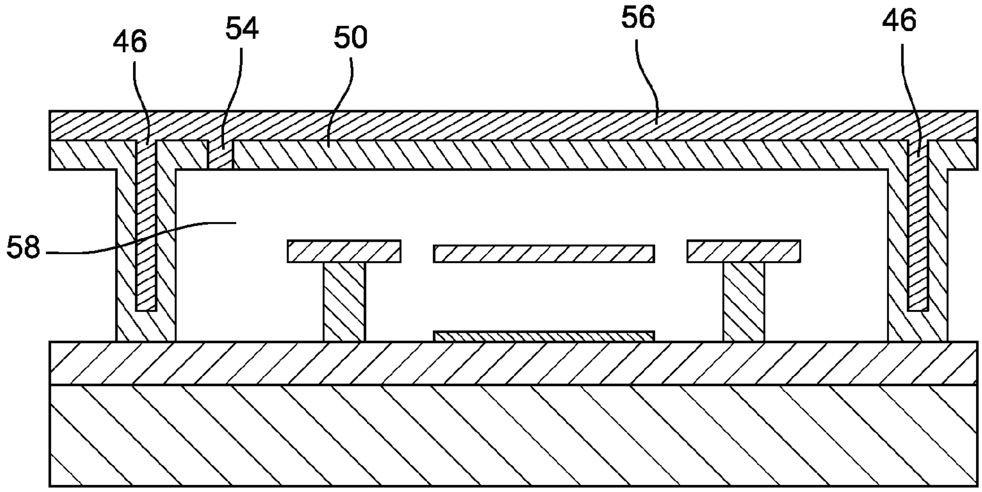


Fig. 18

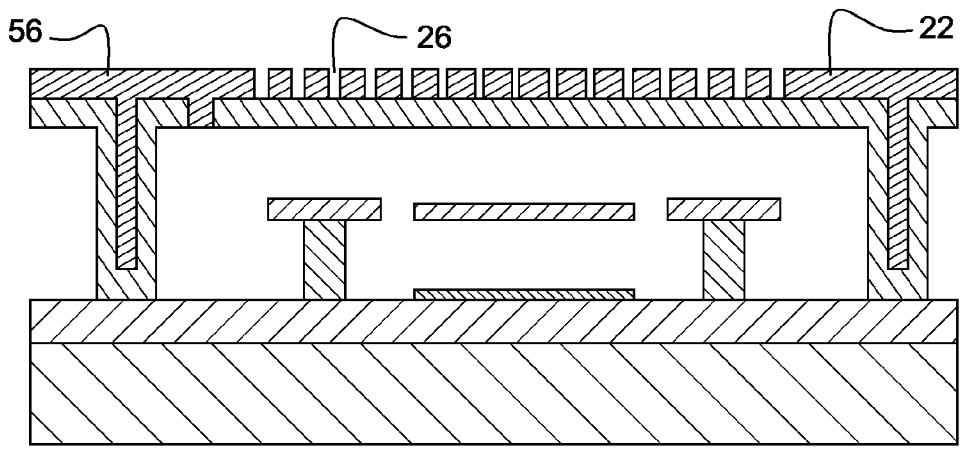


Fig. 19

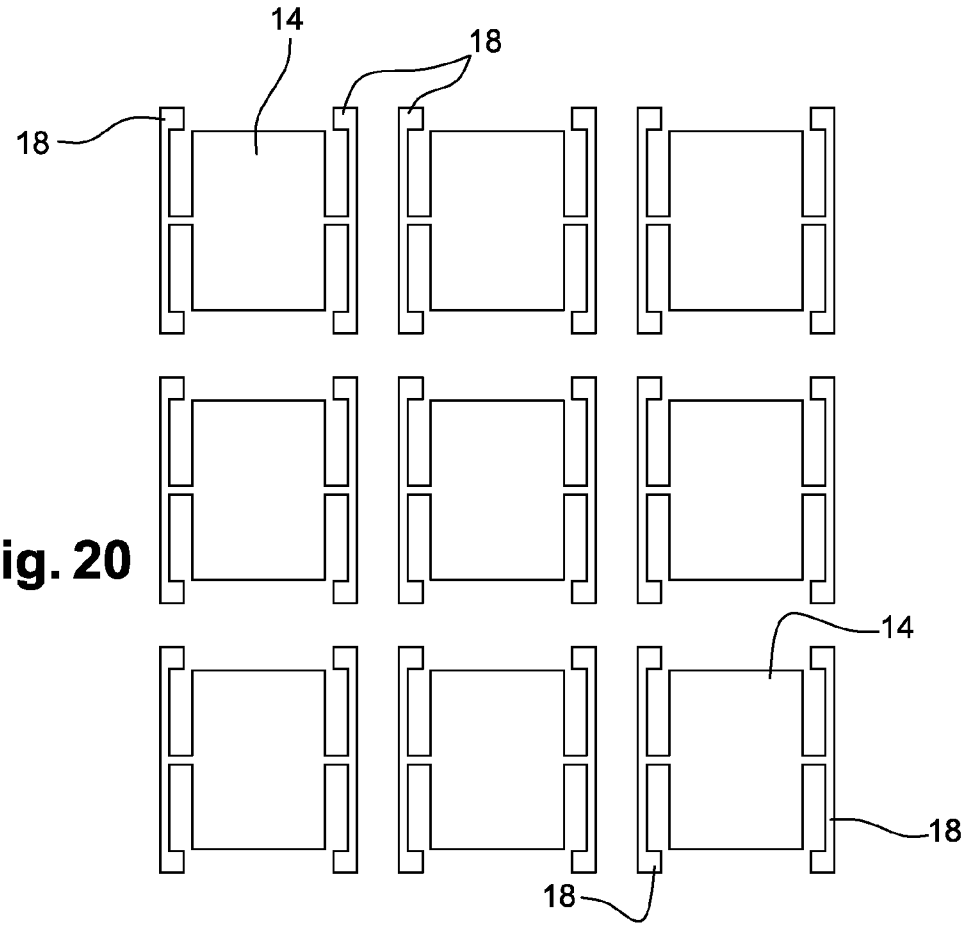


Fig. 20

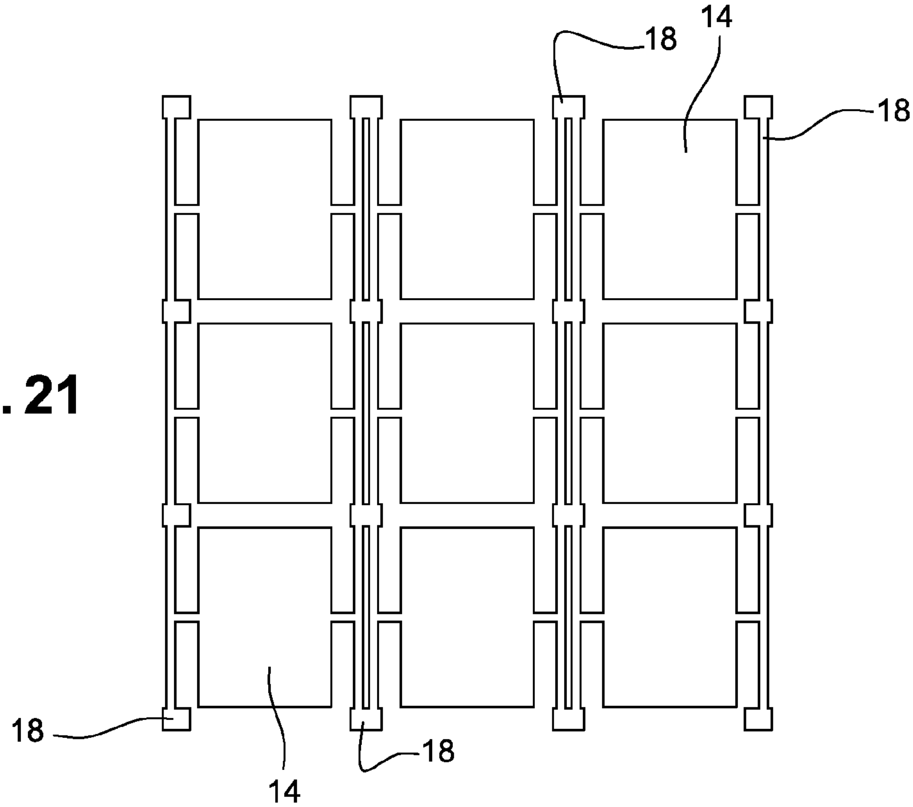


Fig. 21

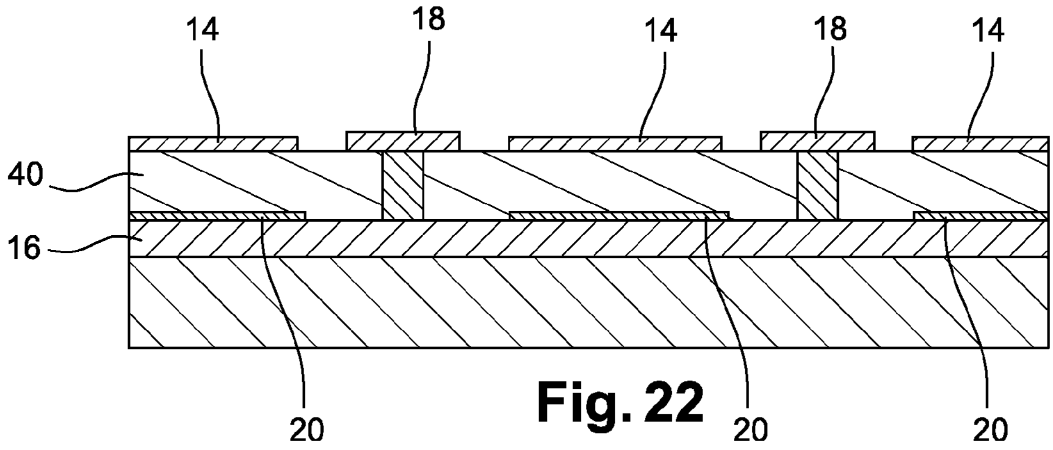


Fig. 22

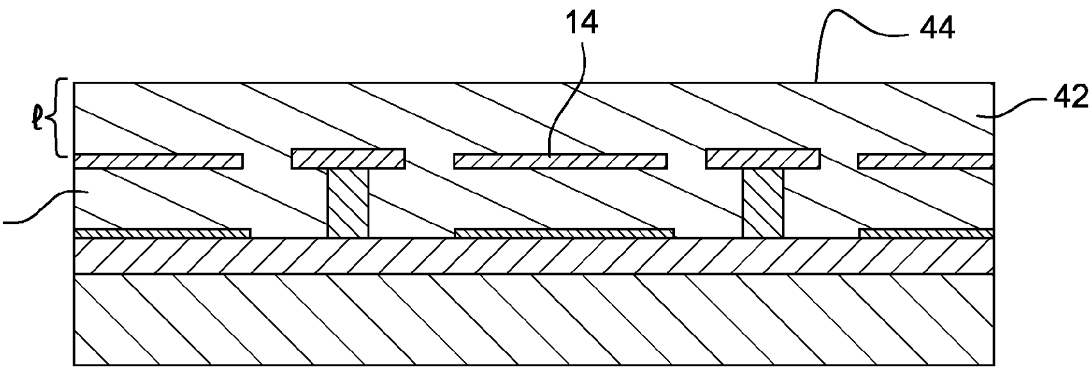


Fig. 23

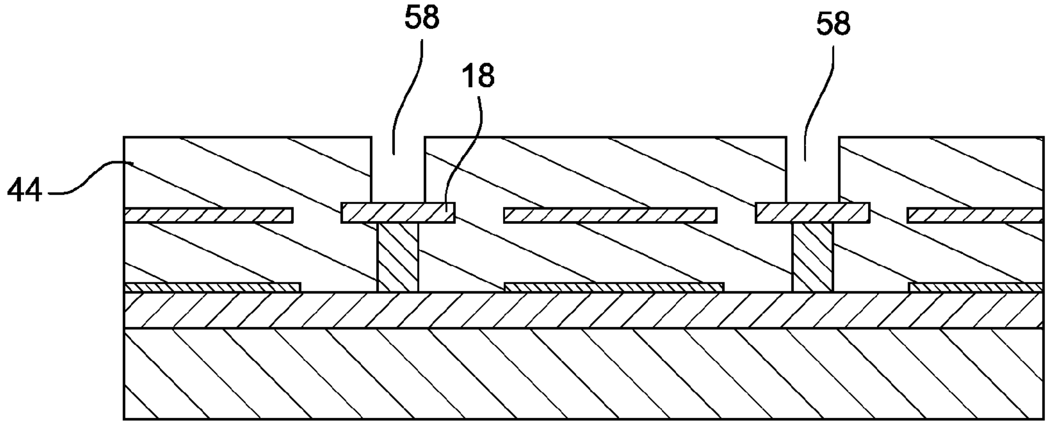


Fig. 24

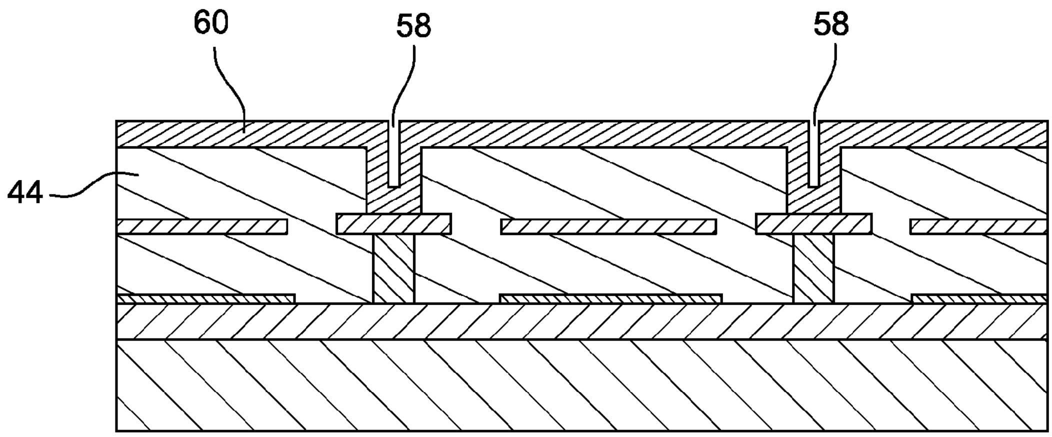


Fig. 25

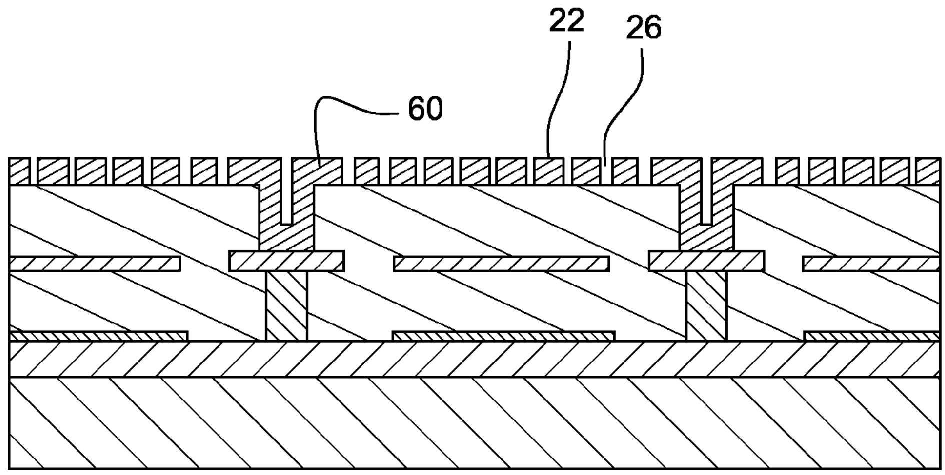


Fig. 26

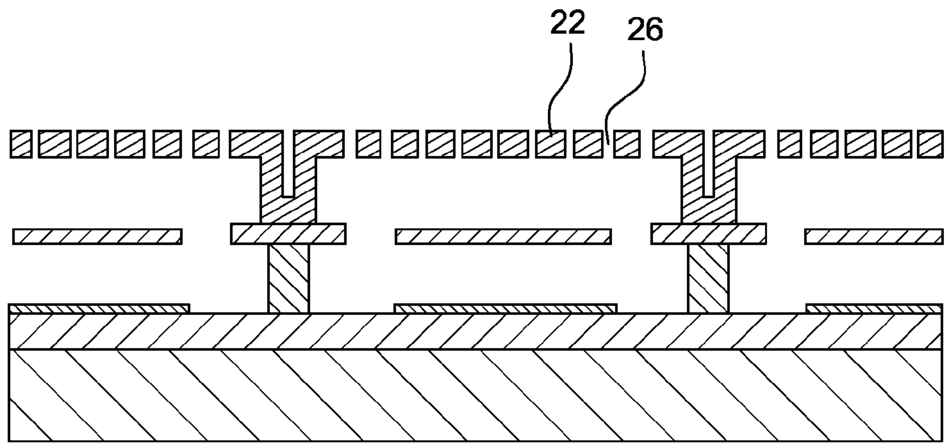


Fig. 27

Europäisches Patentamt
European Patent Office
Office européen des brevets

# RAPPORT DE RECHERCHE EUROPEENNE

Numéro de la demande
EP 11 30 6528

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | EP 1 243 903 A2 (COMMISSARIAT ENERGIE ATOMIQUE [FR]) 25 septembre 2002 (2002-09-25) * alinéas [0032], [0033] * * figures 8,17B * ----- | 1-14 | INV. G01J5/08 G01J5/20 G02B5/18 G01J5/02 |
| Y | US 2005/161589 A1 (KIM HONG KOO [US] ET AL) 28 juillet 2005 (2005-07-28) * alinéas [0004], [0033], [0057], [0061] - [0064] * * figures 9,11,12 * ----- | 1-6,8-14 | |
| Y | FR 2 935 809 A1 (COMMISSARIAT ENERGIE ATOMIQUE [FR]) 12 mars 2010 (2010-03-12) * page 4 - page 7, ligne 5 * * page 14 - page 15 * * figures 2A,2B * ----- | 1,7,8, 10-12 | |

DOMAINES TECHNIQUES RECHERCHES (IPC)

G01J
G02B

Le présent rapport a été établi pour toutes les revendications

1

| Lieu de la recherche | Date d'achèvement de la recherche | Examinateur |
|---|---|---|
| Munich | 22 février 2012 | Jacquin, Jérôme |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 11 30 6528

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-02-2012

| Document brevet cité au rapport de recherche | Date de publication | Membre(s) de la famille de brevet(s) | Date de publication |
|---|---|---|---|
| EP 1243903 A2 | 25-09-2002 | EP 1243903 A2 | 25-09-2002 |
| | | FR 2822541 A1 | 27-09-2002 |
| | | US 2002175284 A1 | 28-11-2002 |
| US 2005161589 A1 | 28-07-2005 | US 2005161589 A1 | 28-07-2005 |
| | | US 2008024873 A1 | 31-01-2008 |
| FR 2935809 A1 | 12-03-2010 | EP 2324377 A1 | 25-05-2011 |
| | | FR 2935809 A1 | 12-03-2010 |
| | | US 2011216229 A1 | 08-09-2011 |
| | | WO 2010029097 A1 | 18-03-2010 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 6094127 A
- US 6753526 A
- US 6924485 A
- FR 2752299